# EUROPÄISCHE PATENTANMELDUNG

(11) **EP 1 074 423 A1**
(43) Veröffentlichungstag der Anmeldung: **07.02.2001**
(21) Anmeldenummer: 99114644.0
(22) Anmeldetag: 26.07.1999
(51) Int. Cl.: B60K 41/04

(54) **Steuerung für den Antriebsstrang eines Kraftfahrzeugs**

(71) Anmelder: SIEMENS AKTIENGESELLSCHAFT, 80333 München (DE)
(72) Erfinder: Graf, Friedrich, 93049 Regensburg (DE); Nock, Ernst, 93057 Regensburg (DE); Lohrenz, Franz, 93053 Regensburg (DE)

(57) **Zusammenfassung**

Eine Antriebsstrangsteuerung (1) eines Kraftfahrzeugs weist auf eine Motorsteuerung (2), durch die das Drehmoment des Motors beeinflussende Größen gesteuert werden, und eine Getriebesteuerung (3), durch die die Schaltvorgänge des automatischen Getriebes gesteuert werden. Die Getriebesteuerung (3) ist mit einer Erkennungsschaltung (50) versehen ist, durch die die jeweilige Fahrsituation des Kraftfahrzeugs ermittelt wird. Durch die Getriebesteuerung (3) werden an die Dynamik der ermittelten Fahrsituation und/oder die Fahrercharakteristik adaptiv angepaßte Änderungen der Getriebeübersetzung durchgeführt.

## Beschreibung

Die Erfindung betrifft eine Steuerung für den Antriebsstrang eines Kraftfahrzeugs (Antriebsstrangsteuerung) nach dem Oberbegriff von Anspruch 1.

Bei einer bekannten Antriebsstrangsteuerung übermittelt die Getriebesteuerung an die Motorsteuerung einen Anteil, um den das (unkorrigierte) Motordrehmoment, das an der Eingangswelle des Getriebes anliegt, zu verändern ist. Dabei ist der Getriebesteuerung dieses unkorrigierte Motordrehmoment bekannt, da sie es entweder selbst berechnet oder es ihr von der Motorsteuerung über eine Kommunikationsleitung übermittelt wird (EP 0 518 855 B1). Die Getriebesteuerung muß dabei keine motorspezifischen Daten enthalten, um eine Drehmomentreduktion in einen Zündungseingriff, oder in einen Eingriff in die Einspritzung oder die Ventilsteuerung, umzurechnen. Die Umrechnung erfolgt in der Motorsteuerung. Dadurch werden die erforderlichen Varianten der Getriebesteuerung erheblich verkleinert.

Bei einer anderen modernen Antriebsstrangsteuerung werden über eine Schnittstelle zwischen der Getriebesteuerung und der Motorsteuerung nur die erforderliche Motormomentreduktion betreffende physikalisch dimensionierte Beschreibungsgrößen ausgetauscht (DE 197 27 044 A1). Die Getriebesteuerung legt dabei das Verhalten des Motorsystems auf der Basis eines verallgemeinerten Modells fest. Dieses beschreibt das von der Getriebesteuerung geforderte Verhalten an den Systemgrenzen Motor-Getriebe (Motorabtriebswelle) eindeutig, ohne sich auf die technische Realisierung im Motorsystem zu beziehen. Die praktische Ausführung eines Motoreingriffs obliegt allein der Motorsteuerung. Diese legt fest, ob ein Zündungseingriff zu erfolgen hat, oder ob die Menge des eingespritzten Kraftstoffs reduziert wird oder ob die Ventilsteuerzeiten oder Ventilcharakteristiken verändert oder ob der Motor über die Drosselklappe gesteuert werden soll. Die Motorsteuerung allein steuert auch alle dazu erforderlichen Aktoren. Die Dynamik eines Übersetzungswechsels wird bei den bekannten Getriebe- und Antriebsstrangsteuerungen nicht beeinflußt.

Der Erfindung liegt die Aufgabe zugrunde, eine Getriebe- und Antriebsstrangsteuerung zu schaffen, die die Dynamik eines Übersetzungswechsels berücksichtigt.

Die Aufgabe der Erfindung wird durch eine Antriebsstrangsteuerung nach Anspruch 1 gelöst. Zweckmäßige Weiterbildungen der Erfindung sind in den Unteransprüchen niedergelegt.

Die Antriebsstrangsteuerung eines Kraftfahrzeugs mit einem Motor und einem automatischen Getriebe ist versehen mit einer Motorsteuerung, durch die das Drehmoment des Motors beeinflussende Größen gesteuert werden, sowie mit einer Getriebesteuerung, durch die die Schaltvorgänge des automatischen Getriebes gesteuert werden, und die mit der Motorsteuerung Daten austauscht, durch die komfortable Schaltungen ermöglicht werden. Dabei weist die Getriebesteuerung eine Erkennungsschaltung auf, durch die die jeweilige Fahrsituation des Kraftfahrzeugs ermittelt wird, und durch die Getriebesteuerung werden an die ermittelte Fahrsituation adaptiv angepaßte Änderungen der Getriebeübersetzung durchgeführt.

Die Erkennung von Fahrsituationen erfolgt zweckmäßigerweise mit einer als Fuzzylogikschaltung ausgebildeten Erkennungsschaltung. Fortschrittliche Getriebesteuerungen sind ohnehin häufig mit Fuzzylogikkomponenten versehen (siehe zum Beispiel F. Graf und H. Weil: Advanced Transmission with Fuzzy Logic, 3^{rd} International Conference, Bologna, 29-31 March 1995, Technical Papers pp. 379-389; sowie EP 0 576 703 A1) und können deshalb leicht mit einer solchen Fahrsituationserkennung ausgerüstet werden.

Die Vorteile der Erfindung liegen vor allem in der mit ihr erreichbaren Verbesserung des Fahrkomforts und der Fahrsicherheit eines Kraftfahrzeugs bei den unterschiedlichsten Fahrsituationen. Bei Schaltungen aus dem Stillstand heraus - zum Beispiel bei einem Übergang von dem Leerlauf des Getriebes in eine Fahrstufe - oder auch bei Schaltungen bei langsamer Fahrt werden sonst übliche störende Schaltgeräusche wirksam vermieden.

Ausführungsbeispiele der Erfindung werden im folgenden anhand der Zeichnungen erläutert. Es zeigen:
- Figur 1: eine Antriebsstrangsteuerung gemäß der Erfindung;
- Figur 2: den Schaltablauf der Antriebsstrangsteuerung nach Figur 1 bei einer Hochschaltung;
- Figur 3: den Schaltablauf der Antriebsstrangsteuerung nach Figur 1 bei einer Rückschaltung, und
- Figur 4: den Schaltablauf bei einem im Stufenschaltmodus betriebenen stufenlosen Getriebe.

Die Dynamik eines Übersetzungswechsels in dem Getriebe einer Antriebsstrangsteuerung eines Kraftfahrzeuges hängt von der Motorführung, der Kupplungspositionierung und der Bewegung des Aktuators in dem Getriebe ab. Um den Fahrkomfort und die Fahrsicherheit zu erhöhen, muß diese Dynamik beim Steuern des Antriebsstrangs hinsichtlich verschiedener Fahrsituationen und unterschiedlicher Fahrercharakteristiken oder Fahrstile berücksichtigt werden. Dies wird vorteilhafterweise dadurch erreicht, dass die Getriebesteuerung eine Erkennungsschaltung aufweist, durch die die jeweilige Fahrsituation des Kraftfahrzeuges ermittelt wird, und dass durch die Getriebesteuerung an die ermittelte Fahrsituation adaptiv angepaßte Änderungen der Getriebeübersetzung durchgeführt werden.

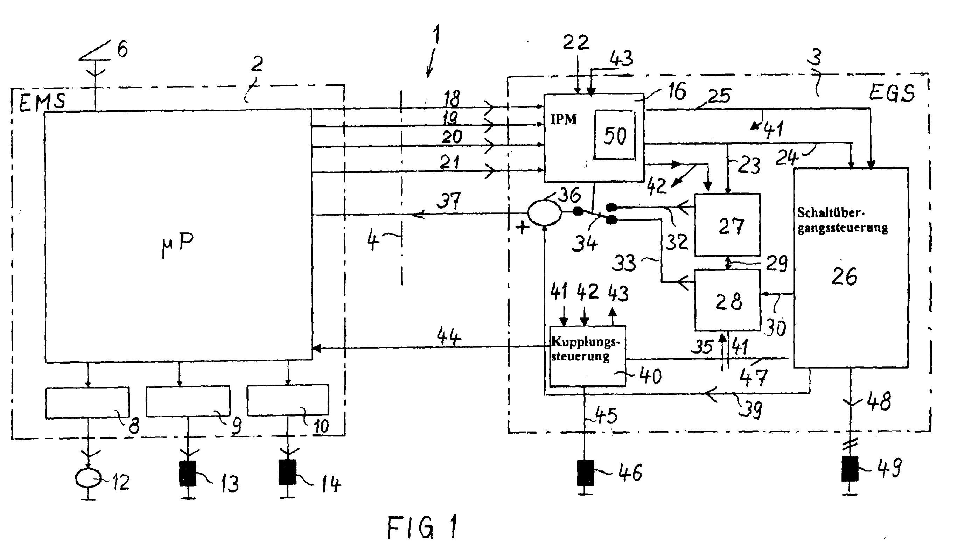

Eine schematisch dargestellte Antriebsstrangsteuerung 1 (**Figur 1**) eines Kraftfahrzeugs enthält eine elektronische Motorsteuerung (abgekürzt: EMS) 2 und eine elektronische Getriebesteuerung (EGS) 3, die untereinander über eine Schnittstelle 4 kommunizieren, indem sie Daten über Betriebsgrößen des Kraftfahrzeugs und Steuersignale, insbesondere in Form von physikalischen Beschreibungsgrößen, untereinander austauschen.

Die Motorsteuerung 2 empfängt Signale von einem Fahrpedal 6 und sie weist drei Steuersignalausgaben auf: eine Signalausgabe 8 für die Drosselklappe, eine Signalausgabe 9 für die Kraftstoffeinspritzung und eine Signalausgabe 10 zum Steuern des Zündwinkels eines hier nicht weiter dargestellten Motors eines Kraftfahrzeugs. Über die Signalausgabe 8 wird ein die Drosselklappe des Kraftfahrzeugs betätigender Elektromotor 12 gesteuert. Über die Signalausgaben 9 und 10 werden Aktoren 13 beziehungsweise 14 (die zum Beispiel als piezoelektrische oder induktive Aktoren ausgeführt sind) gesteuert, die die einzuspritzende Kraftstoffmenge und den Zündwinkel des Motors einstellen.

Die Getriebesteuerung 3 enthält folgende Bestandteile: eine Schaltsteuerung oder IPM-Steuerung 16, die ein integriertes, d. h. gesamtheitliches Steuern des Antriebsstrangs durchführt (IPM steht für Integrated Powertrain Management) und insbesondere die Schaltstrategie festlegt. Sie erhält über Leitungen 18, 19 und 20 von der Motorsteuerung 2 Daten über verschiedene Werte des Motordrehmoments (auch: Motormoments). Über eine Leitung 21 erhält sie eine Information über das von dem Fahrer des Kraftfahrzeugs vorgegebene Motorsollmoment oder aber über die Stellung des Fahrpedals 6.

Über eine Leitung 22 empfängt die IPM-Steuerung 16 die jeweilige Abtriebsdrehzahl des Getriebes, die der Raddrehzahl und damit - in einem vorgegebenen Verhältnis - der Geschwindigkeit des Kraftfahrzeugs entspricht. Über eine sich verzweigende Signalleitung 23, 24 sendet die IPM-Steuerung 16 einen einzustellenden Zielgang oder eine Zielübersetzung an eine Schaltübergangssteuerung 26 und an eine erste Entscheidungsschaltung 27 sowie an eine zweite Entscheidungsschaltung 28. Diese beiden Entscheidungsschaltungen sind durch eine bidirektionale Leitung 29 miteinander verbunden.

Alle relevanten Informationen über die Fahrstrategie und die jeweilige Fahrsituation gelangen über eine Leitung 25 an die Schaltübergangssteuerung 26. Diese sendet an die zweite Entscheidungsschaltung 28 über eine Leitung 30 Steuersignale, mit denen zum Beispiel die zeitliche Ableitung des Motordrehmoments, d. h. die Geschwindigkeit, mit der das Motordrehmoment herabgefahren wird, gesteuert wird.

Je ein Signalausgang der ersten und der zweiten Entscheidungsschaltung 27, 28 sind über Signalleitungen 32 bzw. 33 mit Anschlüssen eines Schalters 34 verbunden. Der von der IPM-Steuerung 16 gesteuerte Schalter 34 verbindet entweder den Ausgang der ersten Entscheidungsschaltung 27 oder den Ausgang der zweiten Entscheidungsschaltung 28 mit einem Addierer 36, dessen Ausgang über eine Leitung 37 mit der Motorsteuerung 2, d.h. insbesondere mit einem Mikroprozessor 38 der Motorsteuerung, verbunden ist. Über die Leitung 37 teilt die Getriebesteuerung 3 der Motorsteuerung 2 das angeforderte Motordrehmoment mit. Über eine Leitung 35 wird an die zweite Entscheidungsschaltung 28 ein Zeittakt gelegt, mit dem das Steuern der Getriebesteuerung 3 von dem Steuern der Motorsteuerung 2 getrennt werden kann. Eine Leitung 39 verbindet einen Ausgang der Schaltübergangssteuerung 26 mit einem Eingang des Addierers 36.

An einem mit "+" gekennzeichneten Eingang des Addierers 36 liegt das von dem Fahrer angeforderte Motordrehmoment an. Dieses sogenannte Fahrerwunschmoment wird außerhalb einer Schaltung, d. h. eines Schaltvorgangs, von der IPM-Steuerung 16 korrigiert. Während einer Schaltung wird es von der Schaltübergangssteuerung 26 korrigiert. Der Schalter 34 unterscheidet somit zwischen der Steuerung außerhalb eines Schaltvorganges und der Steuerung innerhalb oder während eines Schaltvorganges.

Eine Kupplungssteuerung 40 empfängt von der IPM-Steuerung 16 über eine von der Leitung 25 abzweigende Leitung 41 alle relevanten Informationen über die Fahrstrategie und die jeweilige Fahrsituation und über eine Leitung 42 eine Information über die Zielposition der Kupplung, die beim Anfahren des Kraftfahrzeugs benötigt wird. Die Kupplungssteuerung 40 sendet ihrerseits über eine Leitung 43 ein Ausgangssignal an die IPM-Steuerung 16. Über die Leitung 41 empfängt die Kupplungssteuerung 40 Informationen über die jeweilige Fahrstrategie und Fahrsituation. Über die Leitung 42 empfängt sie Informationen über die Zielposition der Kupplung und das übertragene Motordrehmoment, was zum Beispiel beim Anfahren wichtig ist. Über eine Ausgangsleitung 44 übermittelt sie die tatsächliche Kupplungsposition an die Motorsteuerung 2.

Die Leitung 41 ist auch an die zweite Entscheidungsschaltung 28 angeschlossen, so dass an diese auch alle relevanten Informationen über die Fahrstrategie und die jeweilige Fahrsituation gelangen. Der Verlauf der (Signal-)Leitungen 41 und 42 ist in der Zeichnung der besseren Übersichtlichkeit wegen nur angedeutet.

Die Kupplungssteuerung 40 ist durch einer Steuerleitung 45 mit einem Kupplungsaktuator oder Kupplungsaktor 46 verbunden, der die - hier nicht dargestellte - Kupplung des Antriebsstrangs 1 steuert. Über eine Leitung 47, die die Schaltübergangssteuerung 26 mit der Kupplungssteuerung 40 verbindet, wird das Steuern der Kupplung mit dem Schaltvorgang (bei einem automatisierten Handschaltgetriebe oder AMT-Getriebe) koordiniert.

Die Schaltübergangssteuerung 26 ist durch mehrere Steuerleitungen 48, die hier als eine Mehrfachleitung dargestellt sind, mit elektromechanischen oder elektrohydraulischen Getriebeaktuatoren oder Getriebeaktoren 49 verbunden, die die Gangwechsel in dem - hier ebenfalls nicht dargestellten - Getriebe durchführen, indem sie in bekannter Weise Schaltgabeln des Getriebes betätigen. Diese Getriebeaktuatoren setzen dabei die Steuerbefehle in Längs- und Drehbewegungen der Schaltgabeln um. Eine Drehbewegung dient der Gassenwahl, eine Längsbewegung dem Einlegen oder Ausrücken eines Getriebegangs. Einzelheiten der Kupplungsbetätigung und der Gangaktuatoren im Getriebe sind für sich bekannt (siehe zum Beispiel R. Fischer und R. Berger (LUK), Automatisierung von Schaltgetrieben, in dem Bericht der VDI-Tagung "Getriebe und Fahrzeuge", 19.-20.03.1998, Seite 95 ff.).

Die Getriebesteuerung 3 ist mit einer Erkennungsschaltung 50 versehen, die dazu dient, die jeweiligen Fahrsituationen des Kraftfahrzeuges zu erkennen, wie da sind: beschleunigte, gleichmäßige oder verzögerte Fahrt, Bergauf- oder Bergabfahrt, Kurvenfahrt, Fahrt innerörtlich, auf Landstraßen oder Schnellstraßen, Fahrt bei winterlichen Straßenzuständen usw. Die Erkennungsschaltung 50 ist im vorliegenden Ausführungsbeispiel als Fuzzylogikrechner oder -regler ausgebildet und Bestandteil der IPM-Steuerung 16. Sie wertet Sensorsignale aus, die in der Getriebesteuerung 3 ohnehin vorliegen und von dieser ausgewertet werden, wie es in dem eingangs zitierten Beitrag von F. Graf und H. Weil und in der genannten Patentanmeldung EP 0 576 703 A1 erläutert wird. Die zum Erkennen der Fahrsituation von der Erkennungsschaltung 50 abgearbeiteten Fuzzyprogramme werden weiter unten beschrieben.

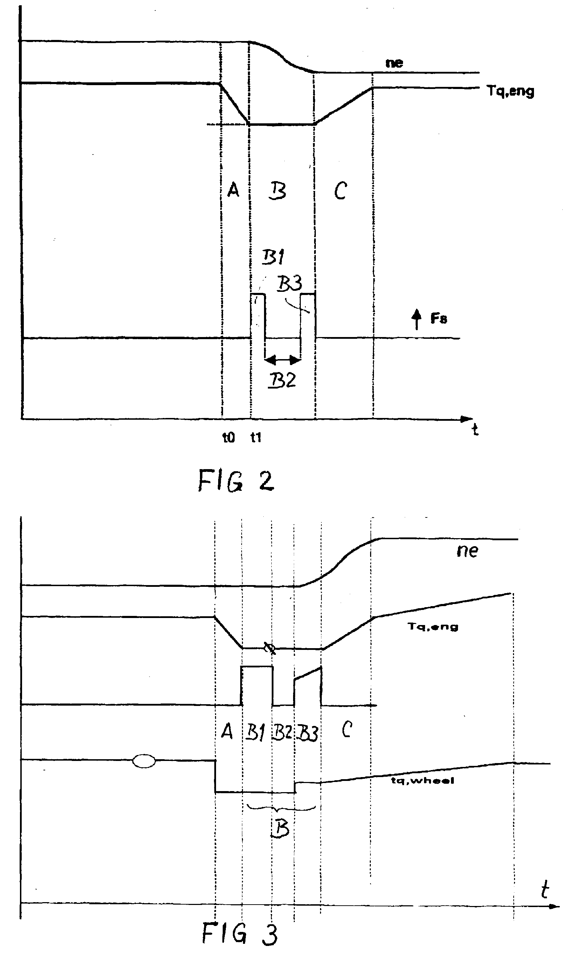

Charakteristisch für die Durchführung einer Gangschaltung oder Übersetzungsänderung in einem Getriebe ist der Kraft-Weg-Verlauf oder der Kraft-Zeit-Verlauf. Dies ist in **Figur 2** am Beispiel eines automatisierten Handschaltgetriebes (AMT-Getriebes) dargestellt, und zwar anhand der Größen Motordrehzahl ne, Motordrehmoment Tq,eng und Schaltkraft Fs. Wird zu einem Zeitpunkt t0 eine Hochschaltung eingeleitet, so wird von der Motorsteuerung 2 während einer Phase A das Motordrehmoment Tq,eng bis zu einem Zeitpunkt tl verringert, während die Motordrehzahl ne noch unverändert bleibt.

Ab dem Zeitpunkt tl wird während einer Zeitspanne oder Teilphase B1 der aktuelle Gang ausgerückt. Während einer Zeitspanne B2 wird, falls es der jeweilige Gangwechsel erfordert, die Gasse im Getriebe gewechselt. Während einer Zeitspanne B3 wird schließlich der neue Gang eingelegt und die Synchronisierung der Getriebeeingangswelle vollzogen. Davon mechanisch abgekoppelt wird das Motordrehmoment Tq,eng während der Phase B, die die Zeitspannen oder Teilphasen B1 bis B3 einschließt, derart gesteuert, dass der Motor möglichst präzise die Synchrondrehzahl des neuen Gangs oder Zielgangs erreicht. Dies kann dadurch erfolgen, dass die Getriebesteuerung 3 eine Zieldrehzahl vorgibt. In einer Phase C wird schließlich durch Einkuppeln der Kraftschluß im Antriebsstrang wieder hergestellt.

Der Verlauf der Vorgänge in den Phasen und Zeitspannen A, B1, B2, B3 und C ist nicht starr. So lassen sich die Vorgänge in den Phasen A und C - d.h. das Lösen und Wiederherstellen des Kraftschlusses im Antriebsstrang - sowohl schnell, dabei aber inkomfortabel, als auch langsam, dabei aber mit längerer Zugkraftunterbrechung, durchführen. In der Phase A ist eine gewisse zeitliche Dehnung nicht nur wegen des damit verbundenen höheren Fahrkomforts anzustreben, sondern auch wegen der erreichbaren geringeren Abgasemissionen. Bei einer geringeren Abregeldynamik für das Motordrehmoment kann nämlich zum Abregeln ausschließlich der sogenannte Luftpfad benutzt werden (bei Benzinmotoren: durch gleichzeitiges Steuern der Drosselklappenstellung und der Einspritzmenge). Die alternative Möglichkeit des Verringerns oder Abregelns des Motordrehmoments durch Verstellen des Zündwinkels nach spät, die zu einer schlechteren Verbrennung und zu mehr Stickoxiden im Abgas führt, kann dadurch vermieden werden.

Entsprechendes gilt für die Phase C, da auch hier ein schneller Aufbau des Motordrehmoments mit einer Verstellung des Zündwinkels durchgeführt werden müsste.

Der Ablauf von Phase B hat einerseits maßgeblichen Einfluß auf die Gesamtschaltzeit - wie auch die Phasen A und C - andererseits aber auch auf die Lebensdauer des Getriebes, insbesondere der Synchronisiereinheit des Getriebes. Hohe Kräfte, vor allem in der Teilphase B3, belasten die mechanischen Komponenten des Getriebes erheblich, insbesondere bei den hohen Kräften, die moderne Aktuatoren aufbringen können. Diese betragen ein Vielfaches der per Hand bei manuell betätigten Getrieben aufgebrachten Kräfte (zum Beispiel bis zu 1000 N).

Bei einer Schaltung mit geringerer (dynamischer) Fahrleistungsanforderung wird in der Teilphase B3 der Kraftverlauf langsam auf ein niedrigeres Niveau gesteuert, bei einer Situation mit hoher Fahrleistungsanforderung hingegen wird die Betätigungskraft für die Kupplung sehr schnell auf einen hohen Endwert gebracht. Ein Beispiel hierfür ist eine 5-3-Rückschaltung bei Beginn eines Überholmanövers (Figur 3). Die Phasen A und C werden bei diesem Beispiel auch stark verkürzt. Kurze Phasen A und C schränken den Schaltkomfort allerdings stark ein, da sowohl eine schnelle Entlastung als auch eine schnelle Belastung des Antriebsstrangs zu Schwingungen führen, die sich als Ruckeln bemerkbar machen können.

Beim Befahren von Steigungen bietet eine kurze Schaltzeit ebenfalls Vorteile. So wird der, zum Beispiel beim Schalten eines automatisierten Handschaltgetriebes (AMT) durch eine Zugkraftunterbrechung auftretende Geschwindigkeitsabfall wirksam verringert.

Diese Erläuterungen zeigen die Zielkonflikte auf, die bei einem vollständig starren Ablauf von Schaltvorgängen bei einem AMT-Getriebe auftreten können, und die durch die in der Antriebsstrangsteuerung nach Figur 1 erfolgte adaptive Anpassung von Änderungen der Getriebeübersetzung an die ermittelte Fahrsituation verhindert werden. Auch die Sicherheit der Funktion eines Getriebes wird erst durch eine solche adaptive Anpassung zuverlässig gewährleistet. Insbesondere bei Rückschaltungen unter Zug sind die Phasen A bis C möglichst kurz zu halten, damit zum Beispiel beim Beginn eines Überholvorgangs die erforderliche Beschleunigung sehr schnell zur Verfügung steht.

Zusätzliche Verkürzungen der Schaltzeit können dadurch erreicht werden, dass man die Phasen A bis C überlappen lässt. So kann der alte Gang in der Teilphase B1 schon teilweise ausgerückt werden, obwohl das Auskuppeln in Phase A noch nicht beendet ist. Analog muss der Gangaktuator 48 in der Phase B3 nicht schon seinen Endanschlag erreicht haben, bevor wieder mit dem Einkuppeln begonnen wird.

Bei einem Einlegen einer Fahrstufe (zum Beispiel einer Vorwärtsfahrstufe D oder einer Rückwärtsfahrstufe R) aus der Leerlaufstellung (N oder neutral) des Getriebes in eine Fahrstufe, wie es zum Beispiel beim Rangieren und beim Rückwärtsfahren geschieht, treten normalerweise Schaltgeräusche auf, die zumindest lästig sind. In der Teilphase B2, und insbesondere in der Teilphase B3 sorgt die Schaltübergangssteuerung 26 dafür, daß das Einlegen des neuen Ganges und die Synchronisation im Getriebe mit geringen Kräften und somit etwas zeitlich gedehnt durchgeführt werden. Damit wird erreicht, dass die erwähnten akustischen Belästigungen entfallen. In solchen Fahrsituationen werden keine starken Fahrzeugbeschleunigungen benötigt. Ähnliches gilt für Schaltvorgänge bei Langsamfahrt.

Entscheidend für eine individuelle Optimierung der Antriebsstrangsteuerung nach den in der jeweiligen Situation maßgeblichen Kriterien ist eine sichere Erkennung der aktuellen Fahrsituation oder Fahrmanöver. Durch die Fahrsituationserkennung innerhalb der adaptiven Schaltstrategie, die von der IPM-Steuerung 16 realisiert wird, ist es möglich, Fahrleistungsanforderugen nicht nur in ihrer Intensität, sondern auch in ihrem dynamischen Anspruch zu klassifizieren.

Im Rahmen von Programmen, wie sie von dem Fuzzylogikrechner oder -regler aus der EP 0 576 703 A1 verarbeitet werden, arbeitet die Erkennungsschaltung 50 Fuzzylogikprogramme wie folgt ab:
- Einen ersten Regelsatz "fast-detection rules", der Mittelwerte oder gefilterte Werte von Sensorsignalen, die den auf der nachfolgenden Seite aufgeführten Eingangsgrößen entsprechen, abarbeitet, und
- einen zweiten Regelsatz "slow-detection rules", der in der Lage ist, rasche Änderungen der Fahrleistungsanforderung zu erkennen.

Solche raschen Änderungen sind zum Beispiel erkennbar an typischen Fahrpedaländerungen durch den Fahrer in spezielle Fahrpedalbereiche hinein (statt der Fahrpedaländerung können auch Änderungen des Soll-Motordrehmoments oder des Soll-Raddrehmoments betrachtet werden). Damit lassen sich zuverlässig Vorgänge wie Überholen und schneller (Ampel-)Start, aber auch Fahren im leichten Schub bis zu einer quantifizierbaren Bremsabsicht erkennen. In solchen Fällen werden aus Gründen des Komforts lange Schaltzeiten bevorzugt.

Das **Fuzzylogikprogramm** für die Erkennungschaltung 50, die auch als Unterprogramm innerhalb der IPM-Steuerung ausgebildet sein kann, lautet wie folgt:
Eingangsgrößen:
   Throttle opening
   Throttle activity
   Output speed
   Throttle average
   Diff. torque
   Lateral acceleration
   Slip of wheels
Ausgangsgrößen:
   Load ( mountain, plain, valley )
   Driver ( sporty, medium, defensive )
   ( Shift control )

Diese Großen werden für die adaptive Kupplungs- und Getriebesteuerung verwertet, und zwar mit folgenden Fuzzy-Regeln:
Rule 1: IF Driver = sporty THEN Clutch engagement = Fast AND Shift forces = High
Rule 2: IF Driver = medium THEN Clutch engagement = Medium AND Shift forces = Medium
Rule 3: IF Driver = defensive THEN Clutch engagement = Slow AND Shift forces = Medium
Rule 4: IF Slip of wheels = High THEN Clutch engagement = Slow AND Shift forces = Medium
Rule 5: IF Load = valley THEN Clutch engagement = Slow AND Shift forces = Medium
Rule 6: IF Throttle speed = high THEN Clutch engagement = Slow AND Shift forces = High

In Worten ausgedrückt, bedeuten diese Regeln folgendes:
1. Sportliche Fahrer wollen schnell schalten und einkuppeln.
2. Normale Fahrer wollen mittelmäßig schnell schalten und einkuppeln.
3. Zurückhaltende Fahrer wollen mittelmäßig schnell schalten und langsam einkuppeln.
4. Wird Durchdrehen der Antriebsräder festgestellt, soll langsam eingekuppelt werden.
5. Bei einer Talfahrt wird nach dem Schalten langsam eingekuppelt.
6. Bei schneller Gaspedalbewegung (Überholen; Ampelstart) soll schnell eingekuppelt und geschaltet werden.

Auch der Winterbetrieb ist ein Betriebsmodus eines Kraftfahrzeugs, bei dem ein adaptiv an die Fahrsituation angepaßter Übersetzungswechsel vorteilhaft ist. Insbesondere Rückschaltungen sind mit einer verlängerten Phase C durchzuführen, wie aus **Figur 3** ersichtlich ist. Die darin in ihrem zeitlichen Verlauf dargestellten Größen ne, Tq,eng und Fs entsprechen denen von Figur 2. Außerdem ist der zeitliche Verlauf des Raddrehmoments tq,wheel dargestellt. Ein Aufbau des durch eine Rückschaltung erhöhten Raddrehmoments tq,wheel muß zeitlich langsamer erfolgen, damit ein plötzliches Durchdrehen der angetriebenen Räder vermieden wird. Dies wird durch ein entsprechend langsames Hochregeln des Kupplungsmoments und des Motordrehmoments erreicht, und dies ermöglicht es dem Fahrer, sich auf das erhöhte Radmoment einzustellen. Anhand der Signale von Raddrehzahlsensoren wird ein Radschlupf erkannt und auf winterliche Fahrbahnbedingungen geschlossen. Der Winterbetrieb hat Vorrang vor einem schnellen Aufbau des Raddrehmoments tq,wheel in fahrleistungsorientierten Situationen. Die Funktion Winterbetrieb ist sowohl bei einem manuellen Schaltmodus des Getriebes als auch bei einem Automatikmodus (d. h. bei vollständig selbsttätig durchgeführten Schaltungen) notwendig.

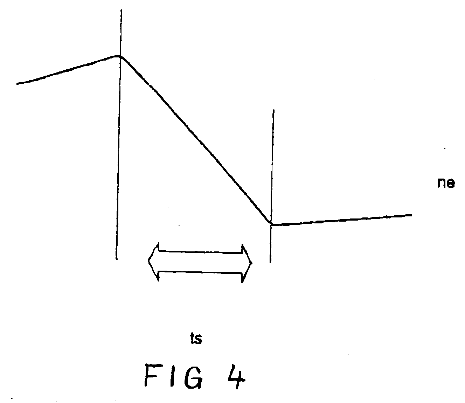

Die vorstehend beschriebene adaptiv an die Fahrsituation angepasste Änderung des Getriebeübersetzung wird analog auch bei stufenlosen (CVT-)Getrieben eingesetzt. Bei einem Stufenschaltmodus eines stufenlosen Getriebes kann die jeweilige Schaltzeit ts (**Figur 4**) so gesteuert werden, dass eine Beeinträchtigung der Fahrsicherheit verhindert wird, d. h. bei geringen Reibwerten der Fahrbahn wird die Schaltzeit ts verlängert.

Zweckmäßigerweise wird die Verstelldynamik generell derart beschränkt, dass keine Gefahr einer Gefährdung durch den Verstellvorgang selbst besteht. Dies ist besonders wichtig bei Fahrzeugen, die über keine Antriebsschlupfregelung verfügen. Außerhalb eines Schaltvorgangs wird allgemein eine Strategie der Anpassung der Übersetzungsänderung an die Fahrsituation angewandt, die das Kraftfahrzeug in einem stabilen Fahrzustand halten. Darüber hinaus gelten sinngemäß alle Regeln, die vorstehend für ein AMT-Getriebe erläutert worden sind.

Bei hoher dynamischer Fahrleistungsanforderung wird bei einem CVT-Getriebe - auch bei einem stufenlosen Modus - die Übersetzung schnell verstellt, wobei durch Fuzzylogikregeln eine Anpassung an die Fahrsituation erfolgt. Eine sportliche Fahrerbewertung ergibt auch in einem virtuellen Stufenmodus der Getriebesteuerung generell ein schnelles Verstellen der Übersetzung.

## Patentansprüche

1. Antriebsstrangsteuerung (1) eines Kraftfahrzeugs mit einem Motor und einem automatischen Getriebe, die versehen ist mit
- einer Motorsteuerung (2), durch die das Drehmoment des Motors beeinflussende Größen gesteuert werden, und
- einer Getriebesteuerung (3), durch die die Schaltvorgänge des automatischen Getriebes gesteuert werden und die mit der Motorsteuerung (2) Daten austauscht, durch die komfortable Schaltungen ermöglicht werden,
**dadurch gekennzeichnet,**
- daß die Getriebesteuerung (3) mit einer Erkennungsschaltung (50) versehen ist, durch die die jeweilige Fahrsituation des Kraftfahrzeugs ermittelt wird, und
- daß durch die Getriebesteuerung (3) an die Dynamik der ermittelten Fahrsituation und/oder die Fahrercharakteristik adaptiv angepaßte Änderungen der Getriebeübersetzung durchgeführt werden.

2. Steuerung nach Anspruch 1, dadurch gekennzeichnet, daß sie eine Schaltsteuerung (16) enthält, die als Fuzzylogikschaltung ausgebildet ist und durch die die Schaltstrategie des Antriebsstrangs (1) festgelegt wird.

3. Steuerung nach Anspruch 2, dadurch gekennzeichnet, daß die Erkennungsschaltung (50) ein Bestandteil der Schaltsteuerung (16) ist.

4. Steuerung nach Anspruch 2 oder 3, dadurch gekennzeichnet, daß sie eine Kupplungssteuerung (40) enthält, an die von der Schaltsteuerung (16) Informationen über die jeweilige Fahrstrategie und Fahrsituation übermittelt werden.

5. Steuerung nach Anspruch 3 oder 4, dadurch gekennzeichnet, daß eine Schaltübergangssteuerung (26) mit der Kupplungssteuerung (40) über eine Leitung (47) verbunden ist, über die die Kupplungssteuerung mit einem Schaltvorgang koordiniert wird.

6. Steuerung nach Anspruch 5, dadurch gekennzeichnet, daß die Schaltübergangssteuerung (26) mit mehreren elektromechanischen oder elektrohydraulischen Getriebeaktuatoren (49) verbunden ist.

7. Steuerung nach einem der Ansprüche 2 bis 6, dadurch gekennzeichnet, daß die Schaltsteuerung (16) zur Abarbeitung eine Fuzzylogikprogramms vorgesehen ist, das aufweist:
- einen ersten Regelsatz, der Mittelwerte oder gefilterte Werte von Sensorsignalen, die abarbeitet, und
- einen zweiten Regelsatz, der in der Lage ist, rasche Änderungen der Fahrleistungsanforderung zu erkennen.

8. Steuerung nach einem der Ansprüche 5 bis 7, dadurch gekennzeichnet, daß durch die Schaltübergangssteuerung (26) bei einem Übergang von der Leerlaufstellung des Getriebes in eine Fahrstufe ein Einlegen des neuen Ganges und eine Getriebesynchronisation mit geringen Kräften durchgeführt wird.
